# EUROPÄISCHE PATENTSCHRIFT

(11) **EP 3 049 300 B1**
(45) Veröffentlichungstag und Bekanntmachung des Hinweises auf die Patenterteilung: **25.04.2018**
(21) Anmeldenummer: 14761876.3
(22) Anmeldetag: 11.09.2014
(51) Int. Cl.: B60T 17/08, B21D 39/04

(54) **KOMBINIERTER BETRIEBSBREMS- UND FEDERSPEICHERBREMSZYLINDER MIT VERBÖRDELUNG ZWISCHEN DEM BETRIEBSBREMSZYLINDER UND EINER ZWISCHENWAND**
COMBINED SERVICE BRAKE AND SPRING BRAKE CYLINDER HAVING CRIMPING BETWEEN THE SERVICE BRAKE CYLINDER AND AN INTERMEDIATE WALL
CYLINDRE COMBINÉ DE FREIN DE SERVICE ET DE FREIN À ACCUMULATEUR AVEC BORDAGE ENTRE LE CYLINDRE DE FREIN DE SERVICE ET UNE PAROI INTERMÉDIAIRE

(30) Priorität: 26.09.2013 DE 102013110639
(43) Veröffentlichungstag der Anmeldung: 03.08.2016
(73) Patentinhaber: KNORR-BREMSE Systeme für Nutzfahrzeuge GmbH, 80809 München (DE)
(72) Erfinder: HERICHER, Stephane, F-14670 Basseneville (FR)
(86) Internationale Anmeldenummer: PCT/EP2014/069369
(87) Internationale Veröffentlichungsnummer: WO 2015/043970

(56) Entgegenhaltungen:
- EP-A2- 0 315 463
- EP-A2- 1 889 768
- WO-A1-97/41021
- WO-A1-2006/066832
- WO-A1-2013/050329
- US-A- 5 345 858
- US-A- 5 676 036
- US-A- 5 722 311
- US-A- 5 765 466
- US-A1- 2006 131 116
- US-A1- 2013 075 211
- US-B1- 6 357 337

## Beschreibung

Die Erfindung geht aus von einem Verfahren zur Herstellung einer formschlüssigen Verbindung zwischen wenigstens einem aus einem verformbaren Material bestehenden Gehäuse eines Betriebsbremszylinder eines kombinierten Betriebsbrems- und Federspeicherbremszylinders, einer eine be- und entlüftbare Betriebsbremskammer des Betriebsbremszylinders begrenzenden beweglichen Membrane und einer Zwischenwand zwischen dem Betriebsbremszylinder und einem Federspeicherbremszylinder des kombinierten Betriebsbrems- und Federspeicherbremszylinders, wobei das Gehäuse des Betriebsbremszylinder einen Randflansch, die Zwischenwand einen ersten Randflansch und die Membrane einen Befestigungsrand aufweist, gemäß dem Oberbegriff von Anspruch 1.

Ein kombinierter Betriebsbrems- und Federspeicherbremszylinder sowie ein Verfahren zu seiner Herstellung sind beispielsweise in DE 10 2005 053 674 B4 beschrieben. Bei dem bekannten Verfahren wird der Rand des Gehäuses des Betriebsbremszylinders zu einer nach radial außen ragenden Schulter vorgeformt und die Zwischenwand zusammen mit der Membrane in einer Matrix positioniert, wobei ein die Zwischenwand und die Membrane umschließender Rand des Gehäuses des Federspeicherbremszylinders die Zwischenwand und die Membrane axial überragt. Sodann wird ein ringförmiger Stempel mit einer im Querschnitt gesehen verrundeten Kontur von oben her gegen den Rand des Gehäuses des Federspeicherbremszylinders gedrückt, so dass der Rand des Gehäuses des Federspeicherbremszylinders die vorgeformte Schulter des Gehäuses des Betriebsbremszylinders, den Rand der Membrane und den Rand der Zwischenwand formschlüssig umgreift, wodurch das Gehäuse des Betriebsbremszylinders, die Membrane, die Zwischenwand und das Gehäuse des Federspeicherbremszylinders miteinander in einem Schritt verbunden werden.

Bei einer solchen Verbindung aller drei Bauteile, nämlich Betriebsbremszylinder, Membrane, Zwischenwand und Federspeicherbremszylinder mittels einer einzigen Verbördelung müssen die Durchmesser der Bauteile jedoch ähnlich groß sein.

Ein gattungsgemäßes Verfahren wird in EP 0 315 463 A2 beschrieben. WO 2006/066832 A1 beschreibt ein Verfahren zur Herstellung von aus wenigstens zwei Gehäusebauteilen bestehenden Gehäusen aus Stahl von in Fahrzeugen, insbesondere in Nutzfahrzeugen verbauten Aggregaten durch Aufbringen einer Zink oder eine Zink beinhaltende Legierung umfassenden Korrosionsschutzschicht zumindest auf eine nach außen weisende Oberfläche wenigstens eines Gehäusebauteils mit anschließender Passivierung, und Herstellen eines formschlüssigen Übergriffs eines Randes des einen Gehäusebauteils durch den Rand des anderen Gehäusebauteils mittels Relativbewegung der zuvor gegeneinander ausgerichteten Gehäusebauteile gegenüber einem Stempel, welcher den Rand des einen Gehäusebauteils und/oder den Rand des anderen Gehäusebauteils plastisch umformt

Der vorliegenden Erfindung liegt demgegenüber die Aufgabe zugrunde, ein Verfahren zu der Herstellung eines kombinierten Betriebsbrems- und Federspeicherbremszylinders der eingangs erwähnten Art derart weiter zu entwickeln, dass es einfacher ist.

Diese Aufgabe wird erfindungsgemäß durch die Merkmale von Anspruch 1 gelöst.

### Offenbarung der Erfindung

Das erfindungsgemäße Verfahren zur Herstellung des kombinierten Betriebsbrems- und Federspeicherbremszylinders beinhaltet wenigstens die folgenden Verfahrensschritte:
a) Wenigstens die Zwischenwand und die Membrane werden von axial oben her in eine Halterung eines Bördelwerkzeugs eingelegt,
b) Sektoren einer mehrteiligen Matrix des eines Bördelwerkzeugs werden von einer radial äußeren Ausgangsposition in eine radial innere Endposition bewegt, in welcher sie einander kontaktierend zusammen wenigstens den ersten Randflansch der Zwischenwand mit einer im Querschnitt gesehen gerundeten Kontur umfassen,
c) das Gehäuse des Betriebsbremszylinders wird in einem ringförmigen Stempel des Bördelwerkzeugs derart positioniert, dass der Randflansch des Gehäuses des Betriebsbremszylinders mit der gerundeten Kontur axial fluchtet,
d) der ringförmige Stempel des Bördelwerkzeugs wird zusammen mit dem Gehäuse des Betriebsbremszylinders in einem Hub ausgehend von einer oberen Ausgangsposition von oben her derart in Richtung Matrix bewegt, dass der Randflansch des Gehäuses des Betriebsbremszylinders gegen die gerundete Kontur der Matrix gedrückt wird, bis der Randflansch derart plastisch umgeformt ist, dass er den Befestigungsrand der Membrane und den ersten Randflansch der Zwischenwand umfasst.

Dadurch wird der Randflansch des Gehäuses des Betriebsbremszylinders umgebördelt und schafft eine Befestigung des Gehäuses des Betriebsbremszylinders an der Zwischenwand unter Zwischenordnung und Befestigung des Befestigungsrandes der Membrane. Damit wird der beispielsweise im Querschnitt gesehen keilförmige Befestigungsrand der Membrane zwischen dem umgebördelten Randflansch des Gehäuses des Betriebsbremszylinders und dem ersten Randflansch der Zwischenwand formschlüssig eingeklemmt.

Weiterhin wird vor dem Schritt a) ein zweiter, vom ersten Randflansch in axialer Richtung weg weisender und beabstandeter Randflansch der Zwischenwand mit dem Gehäuse des Federspeicherbremszylinders verbunden.

Durch die in den Unteransprüchen aufgeführten Maßnahmen sind vorteilhafte Weiterbildungen und Verbesserungen der in den unabhängigen Ansprüchen angegebenen Erfindung möglich.

Das Verbinden des zweiten Randflansches der Zwischenwand mit dem Gehäuse des Federspeicherbremszylinders kann beispielsweise durch Verschließen eines Bajonettverschlusses erfolgen, welcher zuvor an dem zweiten Randflansch der Zwischenwand und an dem Gehäuse des Federspeicherbremszylinders ausgebildet wurde.

### Bei dem erfindungsgemäßen Verfahren kann

e) nach dem Schritt d) von Anspruch 1 der Stempel in seine obere Ausgangsposition zurück bewegt werden, und dann
f) die Sektoren der Matrix von der radial inneren Endposition nach radial außen in die radial äußere Ausgangsposition bewegt werden, und dann
g) der kombinierte Betriebsbrems- und Federspeicherbremszylinder dem Bördelwerkzeug entnommen werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Identische bzw. gleich wirkende Bauteile und Baugruppen sind in unterschiedlichen Ausführungsformen jeweils mit denselben Bezugszahlen bezeichnet.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Querschnittsdarstellung eines Teils eines kombinierten Betriebsbrems- und Federspeicherbremszylinders gemäß einer bevorzugten Ausführungsform in einem Bördelwerkzeug;
- Fig.1A: einen Ausschnitt der Querschnittsdarstellung von Fig.1 mit einer Bördelung zwischen mit einem Randflansch des Betriebsbremszylinders, einem ersten Randflansch einer Zwischenwand und einem Befestigungsrand einer Membrane;
- Fig.2: eine perspektivische Darstellung eines Bördelwerkzeugs, mit dem die Bördelung des kombinierten Betriebsbrems- und Federspeicherbremszylinders von Fig.1 hergestellt wird;
- Fig.3: eine Querschnittsdarstellung des Bördelwerkzeugs von Fig.2, mit Sektoren einer vierteiligen Matrix in einer radial äußeren Ausgangsposition gemäß einem Herstellungsschritt des kombinierten Betriebsbrems- und Federspeicherbremszylinders von Fig.1;
- Fig.4: eine Querschnittsdarstellung des Bördelwerkzeugs von Fig.2, mit den Sektoren der vierteiligen Matrix in einer radial inneren Endposition gemäß einem weiteren Herstellungsschritt des kombinierten Betriebsbrems- und Federspeicherbremszylinders von Fig.1;
- Fig.5: eine seitliche Querschnittsdarstellung des Bördelwerkzeugs von Fig.2, gemäß einem weiteren Herstellungsschritt des kombinierten Betriebsbrems- und Federspeicherbremszylinders von Fig.1;
- Fig.5A: einen Ausschnitt aus der Querschnittsdarstellung von Fig.5;
- Fig.6: eine seitliche Querschnittsdarstellung des Bördelwerkzeugs von Fig.2, gemäß einem weiteren Herstellungsschritt des kombinierten Betriebsbrems- und Federspeicherbremszylinders von Fig.1;
- Fig.6A: einen Ausschnitt aus der Querschnittsdarstellung von Fig.6.

### Beschreibung des Ausführungsbeispiels

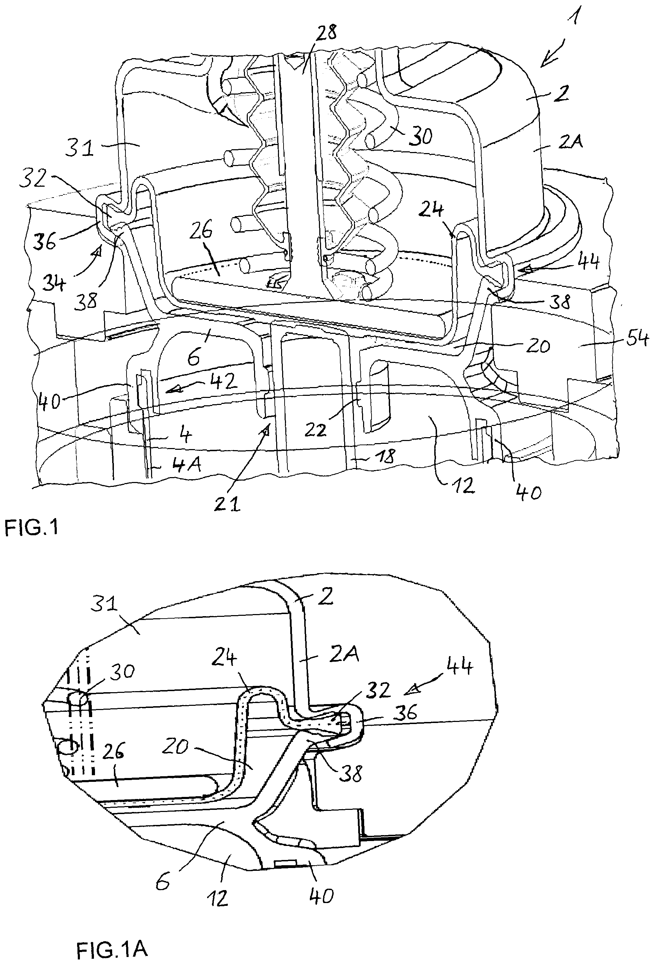

In Fig.1 ist ein kombinierter Betriebsbrems- und Federspeicherbremszylinder 1, nachfolgend Kombizylinder genannt, in einem später noch im Einzelnen beschriebenen Bördelwerkzeugs 46 dargestellt.

Der Kombizylinder 1 besteht aus einem Betriebsbremszylinder 2 und aus einem mit diesem baulich und funktionell verbundenen Federspeicherbremszylinder 4. Der Betriebsbremszylinder 2 besitzt ein Gehäuse 2A und der Federspeicherbremszylinder ein Gehäuse 4A. Der Betriebsbremszylinder 2 und der Federspeicherbremszylinder 4 sind durch eine Zwischenwand 6 voneinander getrennt. Genauer trennt die Zwischenwand 6 eine be- und entlüftbare Federspeicherbremskammer 12 von einer be- und entlüftbaren Betriebsbremskammer 20. Von dem Federspeicherbremszylinder 4 ist in Fig.1 aus Maßstabsgründen lediglich ein endseitiger Rand gezeigt, welcher bevorzugt mittels eines Bajonettverschlusses mit der Zwischenwand verbunden ist.

Innerhalb des Federspeicherbremszylinders 4 ist in bekannter Weise ein hier nicht sichtbarer Federspeicherbremskolben verschiebbar angeordnet, wobei an einer Seite des Federspeicherbremskolbens eine ebenfalls nicht sichtbare Speicherfeder anliegt. Die Speicherfeder stützt sich an ihrer entgegen gesetzten Seite am Boden des Federspeicherbremszylinders 4 ab. Zwischen dem Federspeicherbremskolben und der Zwischenwand ist eine Federspeicherbremskammer 12 ausgebildet, welche belüftbar und entlüftbar ist. Bei Belüftung der Federspeicherbremskammer 12 wird der Federspeicherbremskolben unter Verspannung der Speicherfeder axial in Lösestellung der Feststellbremse verschoben. Bei dieser Verschiebung des Federspeicherbremskolbens wird die Luft, welche innerhalb einer die Speicherfeder aufnehmenden Federkammer ansteht, über ein Entlüftungsventil herausgedrückt. Wird dagegen zum Zwecke der Abbremsung die Federspeicherbremskammer 12 entlüftet, dann vermag die Speicherfeder den Federspeicherbremskolben in Zuspannstellung zu verschieben. Die Funktion eines solchen Federspeicherbremszylinders 4 ist hinlänglich bekannt und soll deshalb hier nicht weiter erläutert werden.

Der Federspeicherbremskolben 8 ist mit einer hohlen Federspeicherbremskolbenstange 18 verbunden, welche sich durch die Zwischenwand 6 in die Betriebsbremskammer 20 des Betriebsbremszylinders 2 erstreckt. Eine in eine zentrale Bohrung 21 der Zwischenwand 6 eingesetzte Dichtungsanordnung 22 dichtet gegenüber der Außenwand der Federspeicherbremskolbenstange 18 während deren Längsbewegung ab. In die Betriebsbremskammer 20 mündet ein nicht gezeigter Einlass, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegen gesetzter Seite ein Druckstück in Form eines steifen Membrantellers 26 vorgesehen ist. Genauer trennt die Membrane 24 die mit Druckmittel be- und entlastbare Betriebsbremskammer 20 des Betriebsbremszylinders 2 von einer eine am Membranteller 26 abgestützte Rückholfeder 30 aufnehmende Federkammer 31.

Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Die sich einerseits am Membranteller 26 und andererseits am Boden des Betriebsbremszylinders 2 abstützende Rückholfeder 30 sorgt dafür, dass die Druckstange 28 bei entlüfteter Betriebsbremskammer 20 in die Lösestellung zurückgeholt wird.

Ein radial äußerer Befestigungsrand 32 der Membrane 24 weist einen keilförmigen, sich nach radial innen hin verjüngenden Querschnitt auf. Dieser radial äußere Befestigungsrand 32 der Membrane 24 mit dem keilförmigen, sich nach radial innen verjüngenden Querschnitt ist in eine komplementär geformte Aufnahme 34 mit keilförmigem, sich nach radial außen erweiternden Querschnitt zwischen einem ersten Randflansch 38 der Zwischenwand 6 und einem Randflansch 36 des Betriebsbremszylinders 2 geklemmt. Genauer bilden der Randflansch 36 des Betriebsbremszylinders 2 und der erste Randflansch 38 der Zwischenwand 6 mit ihren gegeneinander weisenden Innenflächen eine Aufnahme 34 mit keilförmigem Querschnitt für den Befestigungsrand 32 der Membrane 24 zwischen sich aus. Der Befestigungsrand 32 der Membrane 24 ist also keilförmig ausgebildet und zwischen komplementär keilförmig ausgebildeten Flächen des Randflansches 38 der Zwischenwand 6 und des Randflansches 36 des Gehäuses 2A des Betriebsbremszylinders 2 formschlüssig gehalten.

Der Randflansch 36 des Gehäuses 2A des Betriebsbremszylinder 2 ist unter plastischer Verformung einerseits um den Befestigungsrand 32 der Membrane 24 und andererseits um den ersten Randflansch 38 der Zwischenwand 6 derart herumgeformt, dass einerseits das Gehäuse 2A des Betriebsbremszylinders 2 mit der Zwischenwand 6 verbunden und andererseits der Befestigungsrand 32 der Membrane 24 zwischen dem Randflansch 36 des Gehäuses 2A des Betriebsbremszylinders 2 und dem ersten Randflansch 38 der Zwischenwand formschlüssig gehalten ist, wie insbesondere Fig.1 zeigt.

Dabei weist der Randflansch 36 des Gehäuses 2A des Betriebsbremszylinders 2 im Querschnitt gesehen einen hakenförmigen Verlauf auf, welcher einerseits den Befestigungsrand 32 der Membrane 24 und den Randflansch 38 der Zwischenwand 6 umgreift und andererseits ein Widerlager für den Befestigungsrand 32 der Membrane 24 ausbildet.

Andererseits weist die Zwischenwand 6 einen vom ersten Randflansch 38 in axialer Richtung weg weisenden und beabstandeten zweiten Randflansch 40 auf, welcher mit dem Gehäuse 4A des Federspeicherbremszylinders 4 verbunden ist. Wie bereits oben erwähnt, ist die Verbindung zwischen dem zweiten Randflansch 40 der Zwischenwand 6 und dem Gehäuse 4A des Federspeicherbremszylinders 4 mittels eines Bajonettverschlusses 42 hergestellt, wie in Fig.1 dargestellt ist.

Das Herumformen des Randflansches 36 des Gehäuses 2A des Betriebsbremszylinders 2 um den Befestigungsrand 32 der Membrane 24 und um den Randflansch 38 der Zwischenwand 6 wird bevorzugt durch Bördeln bewerkstelligt. Dann sind der Randflansch 36 des Gehäuses 2A des Betriebsbremszylinder 2, der Befestigungsrand 32 der Membrane 24 und der erste Randflansch 38 der Zwischenwand 6 mittels einer Bördelung 44 miteinander verbördelt.

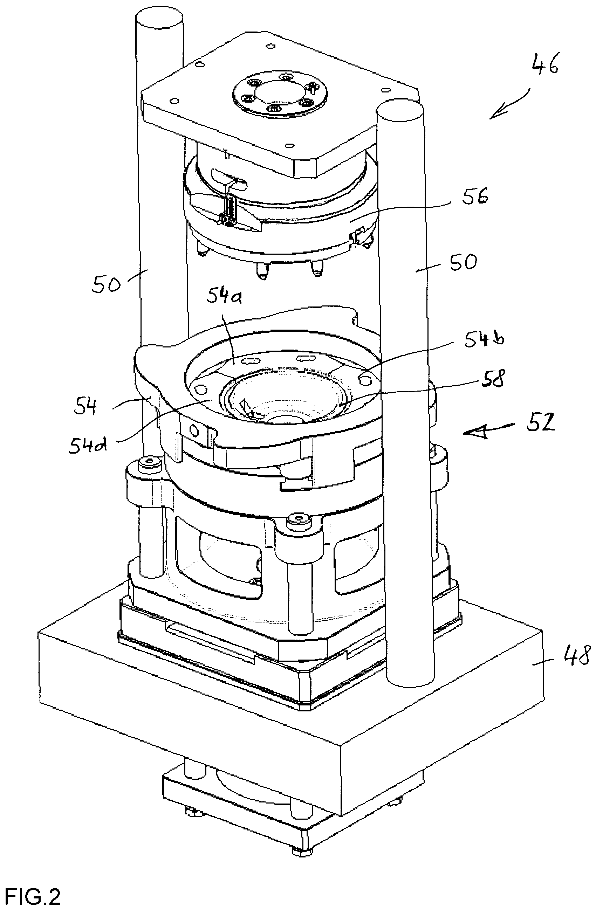

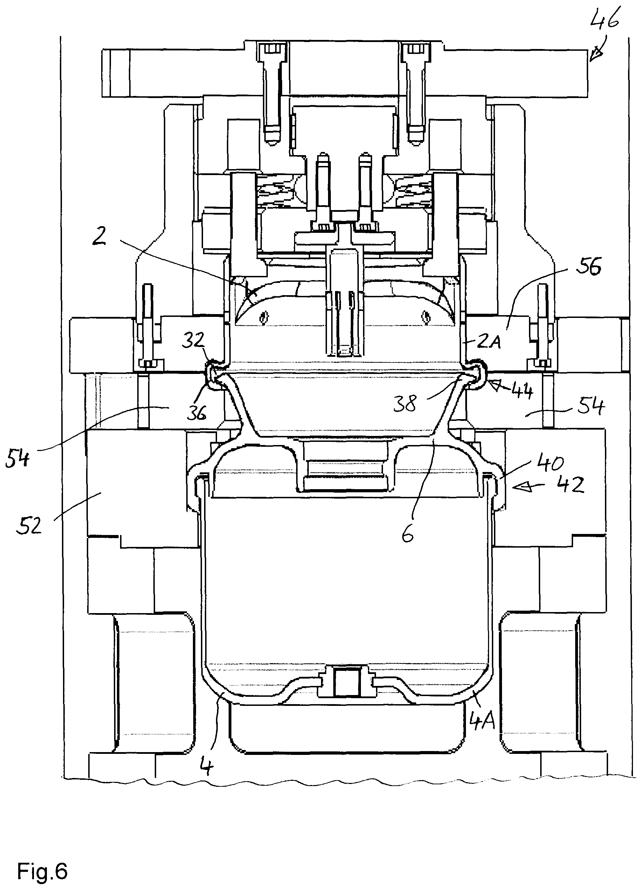

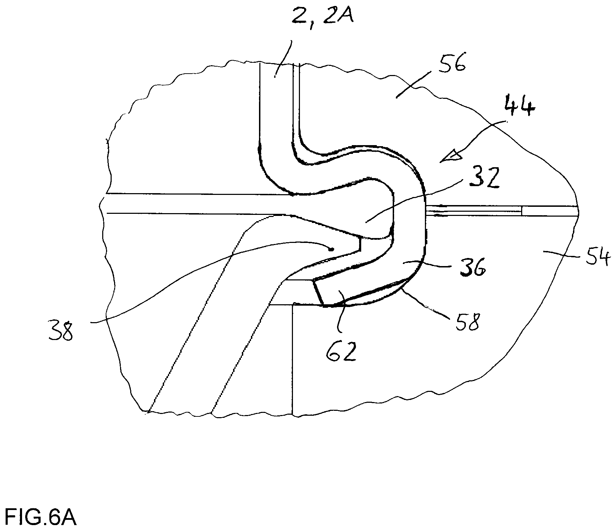

In Fig.2 ist das Bördelwerkzeugs 46 gezeigt, mit welchem die oben beschriebene Bördelung 44 hergestellt wird. Das Bördelwerkzeugs 46 hat beispielsweise einen Standfuss 48 und zwei von diesem nach oben ragende Säulen 50. In dem Standfuss 48 sind eine Halterung 52 sowie eine mehrteilige Matrix 54, die hier beispielsweise aus vier Sektoren 54a bis 54d besteht, angeordnet. Entlang der Säulen 50 ist ein ringförmiger Stempel 56 axial beweglich, der von einem hier nicht gezeigten Antrieb ausgehend von der in Fig.2 gezeigten oberen Ausgangsposition in eine in Fig.6 gezeigte untere Endposition bewegt werden kann.

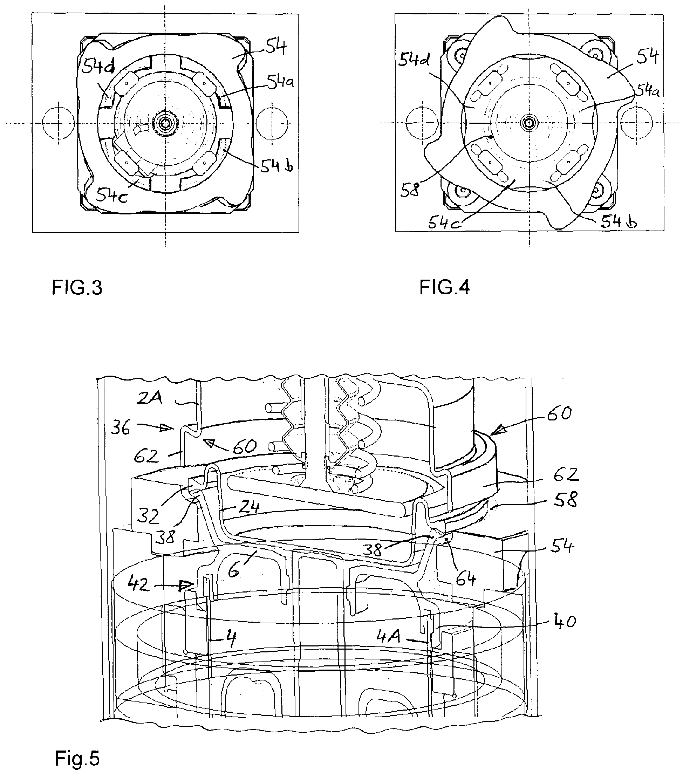

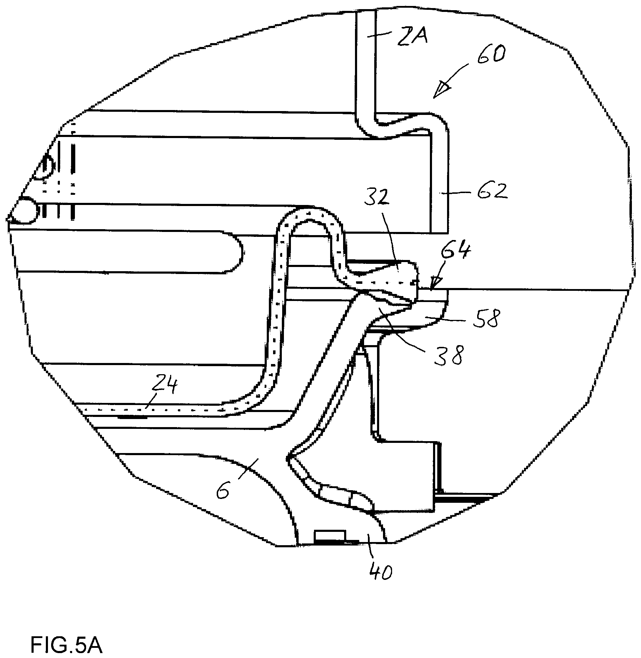

Die hier beispielsweise vier Sektoren 54a bis 54d der Matrix 54 sind in axialer Richtung gesehen stationär in dem Bördelwerkzeugs 46 angeordnet und können von der in Fig.3 gezeigten radial äußeren Ausgangsposition, in welcher diese Sektoren 54a bis 54d voneinander in Umfangsrichtung beabstandet sind, durch einen hier ebenfalls nicht gezeigten Antrieb in eine in Fig.4 gezeigte radial innere Endposition bewegt werden, in welcher diese Sektoren 54a bis 54d sich in Umfangsrichtung gesehen kontaktieren. In dieser radial inneren Endposition wird durch die Sektoren 54a bis 54d eine umlaufende gerundete Kontur 58 ausgebildet, die am Besten in Fig.5A zu sehen ist.

Hiervon ausgehend wird die Bördelung 44 zwischen dem Randflansch 36 des Gehäuses 2A des Betriebsbremszylinders 2, dem Befestigungsrand 32 der Membrane 24 und dem Randflansch 38 der Zwischenwand 6 dann wie folgt hergestellt.

Zunächst kann der zweite Randflansch 40 der Zwischenwand 6 mit dem Gehäuse 4A des Federspeicherbremszylinders 4 verbunden werden, hier beispielsweise durch Verschließen des Bajonettverschlusses 42. Dieser Schritt kann jedoch auch am Ende des Herstellungsprozesses durchgeführt werden.

Dann werden die mit dem Federspeicherbremszylinder 4 bereits verbundene Zwischenwand 6 sowie die Membrane 24 von axial oben her in die Halterung 52 des Bördelwerkzeugs 46 eingelegt. Dieser Zustand ist Fig.5 und Fig.5A gezeigt. Dann liegt der Befestigungsrand 32 der Membrane 24 auf dem ersten Randflansch 38 der Zwischenwand 6 auf.

Sodann werden die Sektoren 54a bis 54d der Matrix 54 des Bördelwerkzeugs 46 von der in Fig.3 gezeigten radial äußeren Ausgangsposition in die in Fig.4 gezeigte radial innere Endposition bewegt, in welcher sie einander kontaktierend und zusammen die Matrix 54 ausbildend den ersten Randflansch 36 der Zwischenwand 6 sowie den Befestigungsrand 32 der Membrane 24 mit ihrer im Querschnitt gesehen gerundeten und umlaufenden Kontur 58 mit Abstand umfassen.

Die Matrix 54, bzw. deren Sektoren 54a bis 54d sind dann so ausgebildet und angeordnet, dass in der radial inneren Endposition der Sektoren 54a bis 54d zwischen dem Befestigungsrand 32 der Membrane 24 und dem ersten Randflansch 38 der Zwischenwand 6 einerseits und der gerundeten Kontur 58 der Matrix 54 ein radialer Ringspalt 64 vorhanden ist, wie in Fig.5 und Fig.5A zu sehen ist.

Das Gehäuse 2A des Betriebsbremszylinders 2 ist bereits beispielsweise durch einen Tiefziehprozess vorgeformt und weist an seinem Randflansch 36 eine nach radial außen weisende Stufe 60 auf, wie in Fig.5 und Fig.5A zu sehen ist. Diese Stufe 36 ist im Querschnitt gesehen an den keilförmigen Querschnitt des Befestigungsrandes 32 der Membrane 24 angepasst. Die Stufe 60 wird axial durch einen zylindrischen Endabschnitt 62 fortgesetzt.

In einem nächsten Schritt wird dann das vorgeformte Gehäuse 2A des Betriebsbremszylinders 2 in dem ringförmigen Stempel 56 des Bördelwerkzeugs 1 derart positioniert, dass der Randflansch 36 und insbesondere der zylindrische Endabschnitt 62 mit dem Ringspalt 64 bzw. mit der gerundeten Kontur 58 der Matrix 54 axial fluchtet. Diese Situation ist ebenfalls in Fig.5 und Fig.5A gezeigt. Der Stempel ist dabei bevorzugt derart ausgebildet, dass er im Bereich der Stufe 60 des Randflansches 36 des Gehäuses 2A des Betriebsbremszylinders 2 komplementär ausgeformt ist, damit auch die Stufe 60 beim Umformen des zylindrischen Endabschnitts 62 im Stempel 56 abgestützt werden und sich nicht mehr verformen kann. Diese Ausbildung des Stempels 56 ist insbesondere aus Fig.6 und Fig.6A ersichtlich.

Dann wird der ringförmige Stempel 56 des Bördelwerkzeugs 46 zusammen mit dem Gehäuse 2A des Betriebsbremszylinders 2 in einem Hub ausgehend von der oberen Ausgangsposition gemäß Fig.2 derart in Richtung Matrix 54 bewegt, dass der Randflansch 36 des Gehäuses 2A des Betriebsbremszylinders 2 und genauer dessen zylindrischer Endabschnitt 62 in den Ringspalt 64 zwischen der gerundeten Kontur 58 der Matrix 54 und den Befestigungsrand 32 der Membrane 24 bzw. den ersten Randflansch 38 der Zwischenwand 6 gedrückt wird, bis der zylindrische Endabschnitt 62 des Randflansches 36 derart plastisch umgeformt ist, dass er den Befestigungsrand 32 der Membrane 24 und den ersten Randflansch 36 der Zwischenwand 6 insbesondere hakenförmig umfasst. Diese Situation ist in Fig.6 und Fig.6A gezeigt.

Wenn dann die Bördelung 44 fertig gestellt ist, wird der Stempel 56 wieder in seine obere Ausgangsposition zurück bewegt und dann die Sektoren 54a bis 54d der Matrix 54 von der radial inneren Endposition nach radial außen in die radial äußere Ausgangsposition zurück bewegt. Schließlich wird der kombinierte Betriebsbrems- und Federspeicherbremszylinder 1 dem Bördelwerkzeugs 46 entnommen.

### Bezugszeichenliste

- 1: Betriebsbrems- und Federspeicher
- 2: Betriebsbremszylinder
- 2A: Gehäuse Betriebsbremszylinder
- 4: Federspeicherbremszylinder
- 4A: Gehäuse Federspeicherbremszylinder
- 6: Zwischenwand
- 12: Federspeicherbremskammer
- 18: Federspeicherbremskolbenstange
- 20: Betriebsbremskammer
- 21: Bohrung
- 22: Dichtungsanordnung
- 24: Membrane
- 26: Membranteller
- 28: Druckstange
- 30: Rückholfeder
- 31: Federkammer
- 32: Befestigungsrand
- 34: Aufnahme
- 36: Randflansch
- 38: erster Randflansch
- 40: zweiter Randflansch
- 42: Bajonettverschluss
- 44: Bördelung
- 46: Bördelwerkzeugs
- 48: Standfuss
- 50: Säulen
- 52: Halterung
- 54: Matrix
- 54a bis 54d: Sektoren
- 56: Stempel
- 58: Kontur
- 60: Stufe
- 62: zylindrischer Endabschnitt
- 64: Ringspalt

## Patentansprüche

1. Verfahren zur Herstellung einer formschlüssigen Verbindung zwischen wenigstens einem aus einem verformbaren Material bestehenden Gehäuse (2A) eines Betriebsbremszylinder (2) eines kombinierten Betriebsbrems- und Federspeicherbremszylinders, einer eine be- und entlüftbare Betriebsbremskammer (20) des Betriebsbremszylinders (2) begrenzenden beweglichen Membrane (24) und einer Zwischenwand (6) zwischen dem Betriebsbremszylinder (2) und einem Federspeicherbremszylinder (4) des kombinierten Betriebsbrems- und Federspeicherbremszylinders, wobei das Gehäuse (2A) des Betriebsbremszylinder (2) einen Randflansch (36), die Zwischenwand (6) einen ersten Randflansch (38) und die Membrane (24) einen Befestigungsrand (32) aufweist, **gekennzeichnet durch** folgende Verfahrensschritte:
a) Wenigstens die Zwischenwand (6) und die Membrane (24) werden von axial oben her in eine Halterung (52) eines Bördelwerkzeugs (46) eingelegt,
b) Sektoren (54a bis 54d) einer mehrteiligen Matrix (54) des Bördelwerkzeugs (46) werden von einer radial äußeren Ausgangsposition in eine radial innere Endposition bewegt, in welcher sie einander kontaktierend zusammen wenigstens den ersten Randflansch (36) der Zwischenwand (6) mit einer im Querschnitt gesehen gerundeten Kontur (58) mit Abstand umfassen,
c) das Gehäuse (2A) des Betriebsbremszylinders (2) wird in einem ringförmigen Stempel (56) des Bördelwerkzeugs (46) derart positioniert, dass der Randflansch (36) des Gehäuses (2A) des Betriebsbremszylinders (2) mit der gerundeten Kontur (58) axial fluchtet,
d) der ringförmige Stempel (56) des Bördelwerkzeugs (46) wird zusammen mit dem Gehäuse (2A) des Betriebsbremszylinders (2) in einem Hub ausgehend von einer oberen Ausgangsposition von oben her derart in Richtung Matrix (54) bewegt, dass der Randflansch (36) des Gehäuses (2A) des Betriebsbremszylinders (2) gegen die gerundete Kontur (58) der Matrix (54) gedrückt wird, bis der Randflansch (36) derart plastisch umgeformt ist, dass er den Befestigungsrand (32) der Membrane (24) und den ersten Randflansch (36) der Zwischenwand (6) umfasst, wobei
e) vor dem Schritt a) ein zweiter, vom ersten Randflansch in axialer Richtung weg weisender und beabstandeter Randflansch der Zwischenwand (6) mit dem Gehäuse (4A) des Federspeicherbremszylinders (4) lösbar verbunden wird.

2. Verfahren nach Anspruch 1, **dadurch gekennzeichnet, dass** das Verbinden des zweiten Randflansches der Zwischenwand (6) mit dem Gehäuse (4A) des Federspeicherbremszylinders (4) durch Verschließen eines Bajonettverschlusses erfolgt.

3. Verfahren nach einem der vorhergehenden Ansprüche, **dadurch gekennzeichnet, dass**
e) nach dem Schritt d) von Anspruch 1 der Stempel in seine obere Ausgangsposition zurück bewegt wird, und dann
a) die Sektoren der Matrix von der radial inneren Endposition nach radial außen in die radial äußere Ausgangsposition bewegt werden, und dann
b) der kombinierte Betriebsbrems- und Federspeicherbremszylinder (1) dem Bördelwerkzeug (46) entnommen wird.

## Claims

1. Method for forming an interlocked connection between a housing (2A) made from a deformable material for a service brake cylinder (2) of a combined service brake and spring-loaded brake cylinder, a movable membrane (24) that delimits a service brake chamber (20) of the service brake cylinder (2) that can be ventilated and bled, and a partition wall (6) between the service brake cylinder (2) and a spring-loaded brake cylinder (4) of the combined service brake and spring-loaded brake cylinder, wherein the housing (2A) of the service brake cylinder (2) has a rim flange (36), the partition wall (6) has a first rim flange (38) and the membrane (24) has a fastening rim (32), **characterized by** the following process steps:
a) at least the partition wall (6) and the membrane (24) are placed axially from above into a holder (52) of a crimping tool (46),
b) segments (54a to 54d) of a multi-component die (54) of the crimping tool (46) are moved from a radially outer starting position to a radially inner end position, in which they form a mutual contact at least with the first rim flange (36) of the partition wall (6) and a contour (58), rounded in cross-section, a distance away therefrom,
c) the housing (2A) of the service brake cylinder (2) is positioned in an annular ram (56) of the crimping tool (46) in such manner that the rim flange (36) of the housing (2A) of the service brake cylinder (2) is axially aligned with the said rounded contour (58),
d) starting from an upper position the annular ram (56) of the crimping tool (46), together with the housing (2A) of the service brake cylinder (2), is moved in a single stroke from above in the direction toward the die (54) in such manner that the rim flange (36) of the housing (2A) of the service brake cylinder (2) is pressed against the rounded contour (58) of the die (54) until the rim flange (36) is plastically deformed so that it envelops the fastening rim (32) of the membrane (24) and the first rim flange (36) of the partition wall (6), and
e) before step a) a second rim flange of the partition wall (6) extending away from the first rim flange in the axial direction and a distance away therefrom is detachably connected to the housing (4A) of the spring-loaded brake cylinder (4).

2. Method according to Claim 1, **characterized in that** the second rim flange of the partition wall (6) is connected to the housing (4A) of the spring-loaded brake cylinder (4) by fixing a bayonet closure.

3. Method according to either of the preceding claims, **characterized in that** e)
after step d) in Claim 1, the ram is moved back to its upper starting position, and then
a) the segments of the die are moved from their radially inner end position, radially outward, to their radially outer starting position, and then
b) the combined service brake and spring-loaded brake cylinder (1) is removed from the crimping tool (46).

## Revendications

1. Procédé de production d'une liaison à complémentarité de forme entre au moins une enveloppe (2A) en un matériau déformable d'un cylindre (2) de frein de service d'un cylindre combiné de frein de service et de frein à ressort accumulateur, une membrane (24) mobile délimitant une chambre (20) de frein de service, pouvant être alimentée en air et mise à l'atmosphère, du cylindre (2) de frein de service et une paroi (6) intermédiaire entre le cylindre (2) de frein de service et un cylindre (4) de frein à ressort accumulateur du cylindre combiné de frein de service et de frein à ressort accumulateur, l'enveloppe (2A) du cylindre (2) de frein de service ayant une bride (36) de bord, la paroi (6) intermédiaire ayant une première bride (38) de bord et la membrane (24) un bord (32) de fixation, **caractérisé par** les stades de procédé suivants :
a) on introduit au moins la paroi (6) intermédiaire et la membrane (24) par le haut axialement dans un support (52) d'un outil (46) de sertissage,
b) on fait passer des secteurs (54a à 54b) d'une matrice (54) en plusieurs parties de l'outil (46) de sertissage d'une position initiale à l'extérieur radialement à une position finale à l'intérieur radialement, dans laquelle, en étant en contact les uns avec les autres, ils entourent à distance, suivant un contour (58) arrondi considéré en section transversale, au moins la première bride (36) de bord de la paroi (6) intermédiaire,
c) on met l'enveloppe (2A) du cylindre (2) de frein de service en position dans un poinçon (56) annulaire de l'outil (46) de sertissage, de manière à ce que la bride (36) de bord de l'enveloppe (2A) du cylindre (2) de frein de service soit alignée axialement sur le contour (58) arrondi,
d) on déplace le poinçon (56) annulaire de l'outil (46) de sertissage, ensemble avec l'enveloppe (2A) du cylindre (2) de frein de service, suivant une course à partir d'une position initiale supérieure depuis le haut en direction de la matrice (54), de manière à ce que la bride (36) de bord de l'enveloppe (2A) du cylindre (2) de frein de service soit poussée sur le contour (58) arrondi de la matrice (54) jusqu'à ce que la bride (36) de bord se déforme plastiquement, de manière à entourer le bord (32) de fixation de la membrane (24) et la première bride (36) de bord de la paroi (6) intermédiaire, dans lequel
e) avant le stade a), on assemble, de manière amovible, à l'enveloppe (4A) du cylindre (4) de frein à ressort accumulateur, une deuxième bride de bord, s'éloignant dans la direction axiale de la première bride de bord en en étant à distance, de la paroi (6) intermédiaire.

2. Procédé suivant la revendication 1, **caractérisé en ce que** l'on effectue l'assemblage de la deuxième bride de bord de la paroi (6) intermédiaire à l'enveloppe (4A) du cylindre (4) de frein à ressort accumulateur par fermeture d'une fermeture à baïonnette.

3. Procédé suivant l'une des revendications précédentes, **caractérisé en ce que**
e) après le stade d) de la revendication 1, on fait revenir le poinçon dans sa position initiale supérieure et ensuite
a) on déplace les secteurs de la matrice de la position d'extrémité intérieure radialement vers l'extérieur radialement pour les faire venir dans la position initiale extérieure radialement et ensuite
b) on retire le cylindre (1) combiné de frein de service et de frein à ressort accumulateur de l'outil (46) de sertissage.
